# EUROPÄISCHE PATENTSCHRIFT

(11) **EP 1 890 878 B1**
(45) Veröffentlichungstag und Bekanntmachung des Hinweises auf die Patenterteilung: **18.09.2013**
(21) Anmeldenummer: 06777246.7
(22) Anmeldetag: 30.05.2006
(51) Int. Cl.: B32B 27/40, B32B 5/18

(54) **VERBUNDELEMENTE, ENTHALTEND VLIESSTOFF AUS THERMOPLASTISCHEM POLYURETHAN**
COMPOSITE ELEMENTS, COMPRISING NONWOVEN THERMOPLASTIC POLYURETHANE FABRIC
ELEMENTS COMPOSITES, CONTENANT DU NON-TISSE EN POLYURETHANNE THERMOPLASTIQUE

(30) Priorität: 03.06.2005 DE 102005025980
(43) Veröffentlichungstag der Anmeldung: 27.02.2008
(73) Patentinhaber: BASF SE, 67056 Ludwigshafen (DE)
(72) Erfinder: MALZ, Hauke, 49356 Diepholz (DE); SERHATKULU, Toprak, Grosse Ile, MI 48138 (US); SCHUSTER, Marita, 32351 Stemwede-Haldem (DE)
(86) Internationale Anmeldenummer: PCT/EP2006/062731
(87) Internationale Veröffentlichungsnummer: WO 2006/128873

(56) Entgegenhaltungen:
- US-A- 5 034 264
- US-A- 5 605 499
- US-A- 5 646 195
- DATABASE WPI Section Ch, Week 198834 Derwent Publications Ltd., London, GB; Class A25, AN 1988-240280 XP002397905 & JP 63 175182 A (KANEBO LTD) 19. Juli 1988 (1988-07-19)
- DATABASE WPI Section Ch, Week 199310 Derwent Publications Ltd., London, GB; Class A28, AN 1993-080891 XP002397906 & JP 05 025780 A (DAINIPPON INK & CHEM KK) 2. Februar 1993 (1993-02-02)
- PATENT ABSTRACTS OF JAPAN Bd. 2003, Nr. 12, 5. Dezember 2003 (2003-12-05) & JP 2003 311051 A (TOYO TIRE & RUBBER CO LTD), 5. November 2003 (2003-11-05)

## Beschreibung

Die Erfindung betrifft Verbundelemente, enthaltend einen Polyurethanschaumstoff (i), einen Vliesstoff aus thermoplastischem Polyurethan (ii) und gegebenenfalls eine Deckschicht (iii), sowie ein Verfahren zu deren Herstellung und die Verwendung der erfindungsgemäßen Verbundelemente als Sitze oder Teppiche.

Polyurethan ist ein vielseitiger Werkstoff, der in vielen Bereichen Anwendung findet. Aufgrund der großen Vielfalt der verwendbaren Rohstoffe können Produkte mit den unterschiedlichsten Eigenschaften hergestellt werden, z.B. Hartschäume zur Dämmung, Blockweichschäume für Matratzen, Formweichschäume für Autositze und Sitzkissen, Akustikschäume zur Schalldämmung, thermoplastische Schäume, Schuhschäume, oder mikrozelluläre Schäume, aber auch kompakte Gießsysteme und Thermoplastische Polyurethane.

Bei der Herstellung von Formschäumen für Autositze hat es sich als technisch vorteilhaft erwiesen, den textilen Bezug für den Autositz in die Form einzulegen und direkt zu hinterschäumen. Nachteilig erweist es sich hierbei aber, dass das Schaumsystem zu Beginn des Verschäumprozesses niedrigviskos ist. Zudem entsteht während der Verschäumens ein Druck in der Form, der dazu führt, dass der Schaum durch die Poren des textilen Bezugs gedrückt wird. Um dies zu verhindern, muss eine Folie zwischen Schaum und textilem Bezug eingelegt werden, um einen Durchschlag des Schaumes durch das Textil zu verhindern. Diese Folie reduziert aber die Wasserdampfdurchlässigkeit des Textils sowie das Schallabsorptionsvermögen des Schaumstoffes. Dies führt z.B. bei Autositzen zu einem großen Komfortverlust.

Alternativ beschreibt DE 19811472 ein thixotropes PUR-System, dass die Eindringtiefe in eine textile Deckschicht verringern soll. Dieses System weist jedoch eine zu hohe Viskosität auf, so dass die resultierende schlechte Fließfähigkeit ein Hinterschäumen von komplizierten Geometrien nicht erlaubt.

Es wurde daher gefunden, dass es vorteilhaft ist, in derartigen Formschaumstoffen die Folie durch einen Vliesstoff (in der englischen Sprache als "nonwoven" bezeichnet) zu ersetzen.

Verbundelemente aus Polyurethan und Vliesstoffe sind in GB 2 235 651 beschrieben. Die dort beschriebenen Verbundelemente, enthaltend Vliesstoffe aus Polyethylenterephthalat oder Polyamid, zeigen jedoch nicht befriedigende Eigenschaften, insbesondere im Hinblick auf Elastizität, Haptik, Haftung zwischen Polyurethanmatrix und Vliesstoff und Wasserdampfdurchlässigkeit. Zudem handelt es sich bei den beschriebenen Verbundelementen um eine Kombination zweier Werkstoffe. Ein sortenreines Recycling wird dadurch erschwert.

US-A-5 646 195 offenbart einen Verbundstoff aus einem Polyurethanschaumstoff und einer Textilschicht, z.B. einem Vliesstoff. Der Polyurethanschaumstoff wird durch Vermischen von Isocyanaten, Polyolen, einem Treibmittel, einem Katalysator und Zusatzstoffen erhalten. Der Vliesstoff wird hierhin als Polypropylengewebe oder allgemeine Vliesstoffe beschrieben. Der Verbundstoff wird zur Herstellung von Teppichen oder Fahrzeugsitzen verwendet.

Die Aufgabe der Erfindung bestand somit darin, für ein Verbundelement eine Kombination aus einer Deckschicht und einem Schaumstoff zu entwickeln, z.B. für ein Verbundelement in Form eines Autositzes, wobei auf eine Schutzfolie verzichtet werden kann. Es war weiterhin Aufgabe der Erfindung, die Schutzfolie derart zu ersetzen, dass gegebenenfalls auf eine Deckschicht verzichtet werden kann.

Insbesondere war es Aufgabe der Erfindung, ein Verbundelement, enthaltend (optionale) Deckschicht und Polyurethanschaumstoff bereit zu stellen, dass vorteilhafte Eigenschaften im Hinblick auf den bestimmungsgemäßen Gebrauch des Verbundelements aufweist. Daher war es Aufgabe, ein Verbundelement mit hoher Wasserdampfdurchlässigkeit, mit guter Elastizität, mit guter Haftung zwischen Deckschicht und Schaumstoff, guter Haptik, guter Optik und gute Recyclebarkeit ("sortenrein") bereit zu stellen.

Ebenfalls war es Aufgabe der Erfindung, ein Verfahren zu Herstellung eines Verbundelements mit vorstehend genannten, vorteilhaften Eigenschaften, bereit zu stellen, wobei das Verfahren bevorzugt besonders wirtschaftlich betrieben werden soll. Folglich war es Aufgabe der Erfindung, ein Verfahren mit kurzen Zykluszeiten, wenig Ausschuss bereit zu stellen. Insbesondere war es Aufgabe der Erfindung ein Verfahren zur Herstellung des oben genannten Verbundelements bereit zu stellen, das die vorstehend genannten Vorteile aufweist, wobei die flüssigen Polyurethansystemkomponenten mit möglichst geringem verfahrenstechnischen Aufwand auf die Deckschicht aufgebracht werden können, ohne dass der Schaum in die Deckschicht eindringt und damit die Optik der Deckschicht beeinträchtigt.

Die Aufgaben konnten dadurch gelöst werden, dass ein Verbundelement enthaltend einen Polyurethanschaumstoff sowie einen Vliesstoff aus thermoplastischen Polyurethan (im Rahmen dieser Anmeldung auch als "TPU" bezeichnet) und eine optionale Deckschicht sowie ein Verfahren zu dessen Herstellung bereit gestellt wird.

Gegenstand der Erfindung ist daher ein Verbundelement, enthaltend
i) Polyurethanschaumstoff, erhältlich durch Vermischen von Isocyanaten, Polyolen und Treibmitteln, sowie gegebenenfalls Katalysatoren und Zusatzstoffen,
ii) Vliesstoff aus thermoplastischem Polyurethan und
iii) gegebenenfalls Deckschicht.

Als optionale Deckschicht (iii) werden üblicherweise Materialien verwendet, die dem Verbundelement ein dekoratives Äußeres verleihen. Diese können aus natürlichen oder synthetischen Stoffen bestehen. Geeignete Deckschichten sind Metallfolien, Kunststofffolien, Kunststoffhäute, Textilien, Vliese und/oder Leder.

Beispiele für geeignete Textilien sind gewebte oder gestrickte Stoffe. Insbesondere solche, enthaltend Kunstfasern wie Polyamid, Polyestern wie Polyethylenterephthalat und Polybutylenterephthalat, Polyacrylnitril, Polyolefinen, Polypropylen, Viscose. Ferner gewebte oder gestrickte Stoffe, enthaltend Naturfasern wie Wolle, Baumwolle, Seide, Leinen usw. Ferner können Nonwovens (= Vliesstoffe), enthaltend Kunstfasern wie Polypropylen, Polyolefincopolymerer, Styrolcopolymeren, Polyaminden, Polyestern wie Polyethylenterphthtalat und Polybutylenterephthalat, Polyacrylnitril, TPU, Polyetherestern, Polyetherethern, Polyesterethern sowie Nonwovens enthaltend Naturfasern wie Seide, Baumwolle, Wolle, Leinen usw geeignete Textilien darstellen.

Beispiele für geeignete Kunststoffe sind Folien aus PVC, Polyolefinen, thermoplastischen Polyurethanen oder Gemischen oder Verbunde daraus.

Bevorzugt verwendet werden Textilen, enthaltend Kunstfasern und/oder Naturfasern.

Die Dicke der Deckschicht beträgt im allgemeinen 0,05 bis 5 Millimeter (mm), bevorzugt von 0,1 bis 2 mm, besonders bevorzugt von 0,2 bis1,2 mm. Die Deckschicht kann unifarben oder verschiedenfarben sein. Verschiedenfarben schließt auch farbliche Muster mit ein.

Als Bestandteil (ii) enthält das erfindungsgemäße Verbundelement einen oder mehrere Vliesstoffe. Unter Vliesstoff wird eine Schicht, ein Vlies und/oder ein Faserflor aus gerichtet angeordneten oder wahllos zueinander befindlichen Fasern, verfestigt durch Reibung und/oder Kohäsion und/oder Adhäsion verstanden.

Bevorzugt werden Papier oder Erzeugnisse, die gewebt, gestrickt, getuftet, unter Einbindung von Bindegarnen oder Filamenten nähgewirkt oder durch ein Nasswalken gefilzt worden sind, nicht als Vliesstoffe im Sinne dieser Anmeldung behandelt.

In einer bevorzugten Ausführungsform ist ein Material dann als "Vliesstoff" (ii) im Sinne dieser Anmeldung zu sehen, wenn mehr als 50 %, insbesondere 60 bis 90 %, der Masse seines faserartigen Bestandteiles aus Fasern mit einem Verhältnis von Länge zu Durchmesser von mehr als 300, insbesondere von mehr als 500, besteht.

In einer bevorzugten Ausführungsform haben die einzelnen Fasern des Nonwovens einen Durchmesser von 50 µm bis 0,1 µm, bevorzugt von 10 µm bis 0,5 µm, insbesondere von 7 µm bis 0,5 um.

In einer bevorzugten Ausführungsform weisen die Vliesstoffe (ii) eine Dicke von 0,01 bis 5 Millimeter (mm), mehr bevorzugt von 0,1 bis 2 mm, besonders bevorzugt von 0,2 bis 1,5 mm, insbesondere von 0,3 bis 1 mm, gemessen nach ISO 9073-2 auf.

In einer bevorzugten Ausführungsform weisen die Vliesstoffe (ii) eine Flächenmasse von 20 bis 500 g/m², mehr bevorzugt von 50 bis 250 g/m², insbesondere bevorzugt von 90-160 g/m² auf, gemessen nach ISO 9073-1 auf.

Der Vliesstoff kann zusätzlich mechanisch verfestigt sein. Bei der mechanischen Verfestigung kann es sich um eine einseitige oder beidseitige mechanischen Verfestigung handeln, bevorzugt liegt eine zweiseitige mechanische Verfestigung vor.

Neben der vorstehend beschriebenen mechanischen Verfestigung kann der Vliesstoff zusätzlich noch thermisch verfestigt sein. Eine thermische Verfestigung kann beispielsweise durch eine Heißluftbehandlung des Vliesstoffes erfolgen.

Nachstehend werden 4 Parameter (P1 bis P4) beschrieben, die der verwendete Vliesstoff (ii) in bevorzugten Ausführungsformen aufweisen kann.
P1) In einer Ausführungsform weist der verwendete Vliesstoff (ii) eine Zugfestigkeit in Produktionsrichtung von 10 Newton (N) pro 5 cm bis 1000 N pro 5 cm, bevorzugt von 40 N pro 5 cm bis 1000 N pro 5 cm, insbesondere von 200-1000 N pro 5 cm gemessen nach. (gemessen nach DIN EN 12127), auf.
P2) In einer Ausführungsform weist der verwendete Vliesstoff (ii) eine Zugfestigkeit senkrecht zur Produktionsrichtung von 10 Newton (N) pro 5 cm bis 1000 N pro 5 cm, bevorzugt von 40 N pro 5 cm bis 1000 N pro 5 cm, insbesondere von 200-1000 N pro 5 cm auf. (gemessen nach DIN EN 12127)
P3) In einer Ausführungsform weist der verwendete Vliesstoff (ii) eine Dehnung in Produktionsrichtung von 10 % bis 800%, bevorzugt von 50 % bis 800 % insbesondere von 250% bis 800% gemessen nach DIN EN 29073 T3 auf.
P4) In einer Ausführungsform weist der verwendete Vliesstoff (ii) eine Dehnung gegen Produktionsrichtung von 10 % bis 800%, bevorzugt von 50 % bis 800 % insbesondere von 250% bis 800% gemessen nach DIN EN 29073 T3 auf.

In einer bevorzugten Ausführungsform weist der Vliesstoff (ii) mindestens zwei, mehr bevorzugt mindestens 3 und insbesondere alle der Merkmale P1 bis P4 auf.

In einer weiteren bevorzugten Ausführungsform ist der verwendete Vliesstoff (ii) einschichtig, d.h. dass über die Dicke des Vliesstoffes hinweg nur eine Fasermischung verwendet wird.

Der verwendete Vliesstoff (ii) ist aus thermoplastischem Polyurethan. Darunter ist zu verstehen, dass der verwendete Vliesstoff (ii) thermoplastisches Polyurethan enthält, bevorzugt als wesentlichen Bestandteil enthält. In einer bevorzugten Ausführungsform enthält der verwendete Vliesstoff (ii) thermoplastisches Polyurethan in einer Menge von 60 Gew-% bis 100 Gew-%, besonders bevorzugt von mehr als 80 Gew-%, insbesondere mehr als 97 Gew-%, bezogen auf das Gesamtgewicht des Vliesstoffes.

Neben thermoplastischem Polyurethan kann der verwendete Vliesstoff (ii) noch andere Polymere oder Hilfsstoffe, wie beispielsweise Polyproplyen, Polyethylen und/oder Polystyrol und/oder Copolymere des Polystrol wie Styrolacrylnitilcopolymere enthalten.

Thermoplastische Polyurethane sind Polyurethane, die, wenn es in dem für den Werkstoff für Verarbeitung und Anwendung typischen Temperaturbereich wiederholt erwärmt und abgekühlt wird, thermoplastisch bleiben. Unter thermoplastisch wird hierbei die Eigenschaft des Polyurethans verstanden, in einem für das Polyurethan typischen Temperaturbereich zwischen 150°C und 300°C wiederholt in der Wärme zu erweichen und beim Abkühlen zu erhärten und im erweichten Zustand wiederholt durch Fließen als Formteil, Extrudat oder Umformteil zu Halbzeug oder Gegenständen formbar zu sein.

Das für den Vliesstoff (ii) verwendete thermoplastische Polyurethan ist erhältlich durch Umsetzung durch Umsetzung von (a-ii) Isocyanaten mit (b-ii) gegenüber Isocyanaten reaktiven Verbindungen, bevorzugt mit einem zahlenmittleren Molekulargewicht von 500 bis 10000 g/mol und gegebenenfalls (c-ii) Kettenverlängerungsmitteln mit einem Molekulargewicht von 50 bis 499 g/mol, gegebenenfalls in Gegenwart von (d-ii) Katalysatoren und/oder (e-ii) Hilfsstoffen herstellt werden.

Die bei der Herstellung der Polyurethane üblicherweise verwendeten Komponenten (a-ii), (b-ii) sowie gegebenenfalls (c-ii), (d-ii) und/oder (e-ii) sollen im Folgenden beispielhaft beschrieben werden:
a) Als organische Isocyanate (a-ii) können allgemein bekannte aliphatische, cycloaliphatische, araliphatische und/oder aromatische Isocyanate eingesetzt werden, beispielsweise Hexamethylendiisocyanat (HDI),, 2,2'-, 2,4'- und/oder 4,4'-Diphenylmethandiisocyanat (MDI), hydriertes MDI (HMDI), Ethylendiphenylendiisocyanat (EDI),. Bevorzugt verwendet wird HDI und 4,4'-MDI.
b-ii) Als gegenüber Isocyanaten reaktive Verbindungen (b) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefasst werden.

Diese weisen üblicherweise ein zahlenmittleres Molekulargewicht von 500 bis 8000 g/mol, bevorzugt 600 bis 5000 g/mol, insbesondere 800 bis 3000 g/mol auf. Ferner weisen sie üblicherweise eine mittleren Funktionalität von 1,8 bis 2,3, bevorzugt 1,9 bis 2,1, insbesondere 2 auf. Unter mittlerer Funktionalität wird die durchschnittliche Anzahl an OH-Gruppen pro Polyolmolekül verstanden.

Falls Polyetheralkohole als (b-ii) eingesetzt werden, so werden diese im allgemeinen nach bekannten Verfahren, beispielsweise durch anionische Polymerisation mit Alkalihydroxiden, als Katalysatoren und unter Zusatz eines Startermoleküls mehrere reaktive Wasserstoffatome gebunden enthält, aus einem oder mehreren Alkylenoxiden, ausgewählt aus Propylenoxid (PO) und Ethylenoxid (EO), hergestellt.

Als Bestandteil (b-ii) können auch Polyetherole verwendet werden, die durch ringöffnende Polymerisation von Tetrahydrofuran erhalten werden. Diese Polytetrahydrofurane weisen bevorzugt eine Funktionalität von etwa 2 auf. Ferner weisen sie bevorzugt ein zahlenmittleres Molekulargewicht von 500 bis 4000 g/mol, bevorzugt von 700 bis 3000 g/mol, besonders bevorzugt von 900 bis 2500 g/mol auf. Polytetrahydrofuran (=PTHF) ist im Fachgebiet auch unter den Bezeichnungen Tetramethylenglykol (=. PTMG), Polyletramethylenglykolether (= PTMEG) oder Polytetramethylenoxide (= PTMO) bekannt.

Falls Polyesteralkohole als Bestandteil (b-ii) eingesetzt werden, dann werden diese üblicherweise durch Kondensation von mehrfunktionellen Alkoholen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

In einer bevorzugten Ausführungsform wird im Bestandteil (b-ii) ein Polyesterol mit einem zahlenmittleren Molekulargewicht von mehr als 400 bis 5000 g/mol, bevorzugt von mehr als 500 bis 3000 g/mol, besonders bevorzugt von 1000 bis 2500 g/mol verwendet.

Bevorzugte Polyole sind Poly-THF, sowie Polyesterole auf Basis von Adipinsäure, insbesondere Polyesterole, erhältlich durch Kondensation von Adipinsäure mit 1,4 Butandiol, 1,2 Ethylenglykol, 2-Methylpropan-1,3-diol oder 3-Methyl-1,5 diol oder Mischungen daraus.
c-ii) Als Kettenverlängerungsmittel (c-ii) können allgemein bekannte aliphatische, araliphatische, aromatische und/oder cycloaliphatische Verbindungen mit einem Molekulargewicht von 50 bis 499, bevorzugt 2-funktionelle Verbindungen, eingesetzt werden, beispielsweise Diamine und/oder Alkandiole mit 2 bis 10 C-Atomen im Alkylenrest, insbesondere Butandiol-1,4, Hexandiol-1,6 und/oder Di-, Tri-, Tetra-, Penta-, Hexa-, Hepta-, Okta-alkylenglykole mit 3 bis 8 Kohlenstoffatomen, bevorzugt entsprechende Oligo- und/oder Polypropylenglykole, wobei auch Mischungen der Kettenverlängerer eingesetzt werden können. Besonders bevorzugt werden Dialkohole als Kettenverlängerungsmittel verwendet, insbesondere wird Butandiol 1,4 eingesetzt.
d-ii) Als geeignete Katalysatoren, welche insbesondere die Reaktion zwischen den NCO-Gruppen der Diisocyanate (a-ii) und den Hydroxylgruppen der Aufbaukomponenten (b-ii) und (c-ii) beschleunigen, sind die nach dem Stand der Technik bekannten Verbindungen. Beispiele hierfür sind tertiären Amine sowie insbesondere organische Metallverbindungen wie Titansäureester, Eisenverbindungen wie z.B. Eisen-(i)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugt werden organische Metallverbindungen eingesetzt, insbesondere Zinndioktoat. Ist das Isocyanat ein aliphatisches Isocynatat, so setzt man das Zinndiokotoat in Konzentrationen von 10 ppm bis 1000 ppm, insbesondere von 100-500 ppm. Ist das Isocyanat eine aromatisches Isocyanat, so setzt man das Zinndioktoat in Konzentrationen von 0,01-100 ppm, bevorzugt 0,1-10 ppm, besonders bevorzugt 0,5-5 ppm ein.
e-ii) Neben Katalysatoren (d-ii) können den Aufbaukomponenten (a) bis (c) auch Hilfsstoffe (e-ii) hinzugefügt werden. Genannt seien beispielsweise oberflächenaktive Substanzen, Füllstoffe, Flammschutzmittel, Keimbildungsmittel, Oxidationsstabilisatoren, Gleit- und Entformungshilfen, Farbstoffe und Pigmente, gegebenenfalls zusätzlich zu den erfindungsgemäßen Stabilisatorengemisch weitere Stabilisatoren, z.B. gegen Hydrolyse, Licht, Hitze oder Verfärbung, anorganische und/oder organische Füllstoffe, Verstärkungsmittel und Weichmacher. In einer bevorzugten Ausführungsform fallen unter die Komponente (e-ii) auch Hydrolyseschutzmittel wie beispielsweise polymere und niedermolekulare Carbodiimide.

Neben den genannten Komponenten (a-ii) und (b-ii) und gegebenenfalls (c-ii), (d-ii) und (e-ii) können auch Kettenregler, üblicherweise mit einem Molekulargewicht von 31 bis 499, eingesetzt werden. Solche Kettenregler sind Verbindungen, die lediglich eine gegenüber Isocyanaten reaktive funktionelle Gruppe aufweisen, wie z. B. monofunktionelle Alkohole, monofunktionelle Amine und/oder monofunktionelle Polyole. Durch solche Kettenregler kann ein Fließverhalten, insbesondere bei TPUs, gezielt eingestellt werden. Kettenregler können im allgemeinen in einer Menge von 0 bis 5, bevorzugt 0,1 bis 1 Gew.-Teile, bezogen auf 100 Gew.-Teile der Komponente (b-ii) eingesetzt werden und fallen definitionsgemäß unter die Komponente (c-ii).

Die Umsetzung zum thermoplastischen Polyurethan findet bevorzugt in Abwesenheit von Treibmitteln statt. Bei dem erhaltenen thermoplastischen Polyurethan handelt es sich somit bevorzugt um ein kompaktes, thermoplastisches Polyurethan.

Alle in dieser Schrift genannten Molekulargewichte weisen die Einheit [g/mol] auf.

Zur Einstellung von Härte der TPUs können die Aufbaukomponenten (b-ii) und (c-ii) in relativ breiten molaren Verhältnissen variiert werden. Bewährt haben sich molare Verhältnisse von Komponente (b-ii) zu insgesamt einzusetzenden Kettenverlängerungsmitteln (c) von 10 : 1 bis 1 : 10, insbesondere von 1 : 1 bis 1 : 4, wobei die Härte der TPU mit zunehmendem Gehalt an (c) ansteigt.

Die Umsetzung kann bei üblichen Kennzahlen erfolgen, beispielsweise von 800 bis 1100. Die Kennzahl ist definiert durch 1000 mal das Verhältnis der insgesamt bei der Umsetzung eingesetzten Isocyanatgruppen der Komponente (a) zu den gegenüber Isocyanaten reaktiven Gruppen, d.h. den aktiven Wasserstoffen, der Komponenten (b) und (c). Bei einer Kennzahl von 1000 kommt auf eine Isocyanatgruppe der Komponente (a) ein aktives Wasserstoffatom, d.h. eine gegenüber Isocyanaten reaktive Funktion, der Komponenten (b) und (c). Bei Kennzahlen über 1000 liegen mehr Isocyanatgruppen als OH-Gruppen vor.

Bevorzugt wird eine Kennzahl von 970-1000, besonders bevorzugt 980-995 verwendet.

Eine Kennzahl unter 1000 kann vorteilhaft sein, weil dadurch die Molmasse des TPU erniedrigt wird und damit der Schmelzindex in einen für die Verarbeitung bevorzugten Bereich steigt.

In einer bevorzugten Ausführungsform weist das thermoplastische Polyurethan, das zur Herstellung des Vliesstoffes (ii) eingesetzt wird, eine Shorehärte von 70 Shore A bis 54 Shore D, besonders bevorzugt von 80 Shore A- 95 Shore A, gemessen nach DIN 53505 auf.

Das thermoplastische Polyurethan als solches weist üblicherweise eine Dichte von 800 bis 1300 Gramm pro Liter (g/l), bevorzugt von 1000 bis 1250 g/l auf.

In einer bevorzugten Ausführungsform weist das thermoplastische Polyurethan, das zur Herstellung des Vliesstoffes (ii) eingesetzt wird, einen Meltflowindex (MFR) von 40-1000 (210°C, 21 kg), besonders bevorzugt einen MFR von 60-600, insbesondere bevorzugt einen MFR von 60-200 gemessen nach DIN EN ISO 1133, auf.

Die Herstellung der TPU kann nach den bekannten Verfahren kontinuierlich, beispielsweise mit Reaktionsextrudern oder dem Bandverfahren nach One-shot oder dem Prepolymerverfahren, oder diskontinuierlich nach dem bekannten Prepolymerprozess erfolgen. Bei diesen Verfahren können die zur Reaktion kommenden Komponenten (a), (b) und gegebenenfalls (c), (d) und/oder (e) nacheinander oder gleichzeitig miteinander vermischt werden, wobei die Reaktion unmittelbar einsetzt. '

Beim Extruderverfahren werden die Aufbaukomponenten (a), (b) sowie gegebenenfalls (c), (d) und/oder (e) einzeln oder als Gemisch in den Extruder eingeführt, z.B. bei Temperaturen von 100 bis 280°C, vorzugsweise 140 bis 250°C zur Reaktion gebracht, das erhaltene TPU wird extrudiert, abgekühlt und granuliert.

Die thermoplastisches Polyurethan enthaltenden Vliesstoffe (ii) können üblicherweise durch das aus dem Stand der Technik bekannte "Meltblown-Verfahren" oder "Spunbond-Verfahren" aus vorstehend beschriebenen thermoplastischen Polyurethan hergestellt werden. "Meltblown-Verfahren" und "Spunbond-Verfahren" sind im Fachgebiet bekannt.

Die dabei entstehenden Vliesstoffe unterscheiden sich im allgemeinen in ihren mechanischen Eigenschaften und ihrer Konsistenz. So sind nach dem Spundbond-Verfahren hergestellte Vliesstoffe (ii) besonders stabil in sowohl in horizontaler als auch in vertikaler Richtung, besitzen aber eine offenporige Struktur.

Nach dem Meitblown-Verfahren hergestellte Vliesstoffe (ii) haben ein besonders dichtes Netzwerk an Fasern und bilden damit eine sehr gute Barriere für Flüssigkeiten.

Nach dem Meltblown-Verfahren hergestellte Vliesstoffe (ii) werden bevorzugt verwendet.

Zur Herstellung eines Vliesstoffs aus thermoplastischen Polyurethan (= engl.: TPU-Nonwoven) nach dem Meltblownverfahren kann eine kommerzielle Anlage zur Herstellung von Meltblown-Vliesstoffen verwendet werden. Solche Anlagen werden beispielweise von der Fa. Reifenhäuser, Germany, vertrieben.

Schematisch wird üblicherweise bei dem Meltblownverfahren das TPU in einem Extruder aufgeschmolzen und mittels üblicher Hilfsmittel wie Schmelzepumpen und Filter zu einem Spinnbalken geführt. Hier fließt das Polymer im allgemeinen durch Düsen und wird am Düsenausgang durch einen Luftstrom zu einem Faden verstreckt. Die verstreckten Fäden werden üblicherweise auf einer Trommel oder einem Band abgelegt und weitertransportiert.

In einer bevorzugten Ausführungsform wird als Extruder ein Einwellenextruder mit einem Kompressionsverhältnis von 1:2-1:3 insbesondere bevorzugt 1:2-1:2,5 verwendet.

Bevorzugt wird zudem eine Dreizonenschnecke mit einem L/D Verhältnis (Länge zu Durchmesser) von 25-30 verwendet. Bevorzugt sind die drei Zonen dabei gleich lang. Bevorzugt hat die Dreizonenschnecke eine durchgehend konstante Gangsteigung von 0,8-1,2 D, insbesondere bevorzugt 0,95-1,05 D. Das Spiel zwischen Schnecke und Zylinder ist > 0,1 mm, bevorzugt 0,1-0,2 mm.

Wird als Extruderschnecke eine Barriereschnecke verwendet, so wird bevorzugt ein Überströmspalt > 1,2 mm verwendet.

Besitzt die Schnecke Mischteile, so sind diese Mischteile bevorzugt keine Scherteile.

Die Nonwovenanlage wird üblicherweise so dimensioniert, dass die Verweilzeit des TPU möglichst kurz ist, d.h. < 15 min, bevorzugt < 10 min, insbesondere bevorzugt < 5 min.

Üblicherweise wird TPU je nach Härte zwischen 180°C und 220°C verarbeitet. Überraschenderweise hat sich jetzt aber gezeigt, dass TPU-Nonwovens sich besonders gut herstellen lassen, wenn die Verarbeitungstemperaturen größer als die üblichen empfohlenen Verarbeitungstemperaturen sind. Bevorzugt erfolgt die Verarbeitung des thermoplastischen Polyurethans bei folgenden Temperaturen

Für TPU mit einer Shorehärte von 75 A bis 85 A:
Adapter von 180°C bis 240°C, mehr bevorzugt bei Temperaturen von 200°C bis 220°C
Kopf von 180°C bis 240°C, mehr bevorzugt bei Temperaturen von 200°C bis 220°C
Düse von 180°C bis 240°C, mehr bevorzugt bei Temperaturen von 200°C bis 220°C.

Für TPU mit einer Shorehärte > 85 A, bevorzugt 90 A-98 A:
Adapter von 200°C bis 260°C, mehr bevorzugt bei Temperaturen von 220°C bis 240°C
Kopf von 200°C bis 260°C, mehr bevorzugt bei Temperaturen von 220°C bis 240°C
Düse von 200°C bis 260°C, mehr bevorzugt bei Temperaturen von 220°C bis 240°C.

Das erfindungsgemäße Verbundelement enthält neben der Deckschicht (iii) und dem Fliesstoff (ii) einen Polyurethanschaumstoff (i).

Der Polyurethanschaumstoff (i) ist erhältlich durch Umsetzung von Polyurethansystemkomponenten, enthaltend eine Polyisocyanatkomponente und eine Polyolkomponente.

Die Isocyanatkomponente umfasst Polyisocyanate (a-i).

Die Polyolkomponente umfasst Polyole (b-i) und Treibmittel (c-i) sowie gegebenenfalls Katalysatoren (d-i), und Zusatzstoffe (e-i), wie Flammschutzmittel, Farbstoffe, Pigmente, Stabilisatoren, Füllstoffe und dergleichen.

Bei den verwendeten Polyisocyanate (a-i) handelt es sich um auf dem Polyurethangebiet üblichen Isocyanate. In Betracht kommen im allgemeinen aliphatische, cycloaliphatische, arylaliphatische und aromatische mehrwertige Isocyanate. Bevorzugt werden aromatische Di- und Polyisocyanate verwendet. Bevorzugte Beispiele sind 2,4- und 2,6-Toluylendüsocyanat, sowie beliebige Gemische dieser Isomeren; 2,2'-, 2,4'- und 4,4'-Diphenylmethan-diisocyanat sowie beliebige Gemische dieser Isomeren; Mischungen aus 2,2'- 2,4'-, 4,4'-Diphenylmethan-diisocyanaten und Polyphenyl-polymethylen-polyisocyanaten (Roh-MDI). Alternativ können auch Gemische aus Toluylendiisocyanaten und Roh-MDI eingesetzt werden.

Die Polyisocyanate (a-i) können auch in Form von Polyisocyanatprepolymeren eingesetzt werden. Die Herstellung der Prepolymere erfolgt im allgemeinen durch Umsetzung der beschriebene Polyisocyanate (a-i), beispielsweise bei Temperaturen von 20°C bis 100°C, bevorzugt bei etwa 80°C, mit nachstehend beschriebenen Polyolen (b-i) zum Prepolymer. Das Polyol-Polyisocyanat-Verhältnis wird im allgemeinen so gewählt, dass der NCO-Gehalt des Prepolymeren 20 bis 32 Gew-%, vorzugsweise 25 bis 31 Gew-%, beträgt.

Als Polyole (b-i) werden im allgemeinen Polyetheralkohole oder Polyesteralkohole verwendet. In Betracht kommen jedoch auch andere hydroxylgruppenhaltige Polymere, beispielsweise Polyesteramide, Polyacetale.

Geeignete Polyesteralkohole werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, beispielsweise Hexandiol, mit mehrfunktionellen Carbonsäuren mit 2 bis 12 Kohlenstoffatomen, beispielsweise Adipinsäure und/oder Phthalsäure, hergestellt. Die eingesetzten Polyetheralkohole haben zumeist eine Funktionalität zwischen 2 und 8, insbesondere 4 bis 3, besonders bevorzugt 2-3.

Bevorzugt werden als Polyole (b-i) Polyetheralkohole verwendet. Geeignete Polyetheralkohole sind nachstehend unter der Komponente (b-i-1) beschrieben.

Im allgemeinen weisen die verwendeten Polyetherpolyole eine (b-i-1) OH-Zahl von 15 bis 200, bevorzugt von 20 bis 120, besonders bevorzugt von 22 bis 90, und eine nominale Funktionalität von 2 bis 4, bevorzugt von 2,2 bis 2,9 auf.

Gegebenenfalls kann die Komponente (b-i) auch weitere Verbindungen mit gegenüber Isocyanaten reaktiven Wasserstoffatomen enthalten, wobei diese Verbindungen bevorzugt zwei oder mehr reaktive Gruppen, ausgewählt aus OH-Gruppen, SH-Gruppen, NH-Gruppen, NH₂-Gruppen und CH-aciden Gruppen, wie z.B. β-Diketo-Gruppen, im Molekül tragen. Je nach Vorhandensein dieser Verbindungen in der Komponente (b) umfasst im Rahmen dieser Erfindung der Begriff Polyurethane allgemein Polyisocyanat-Polyadditionsprodukte, beispielsweise auch Polyharnstoffe.

In einer bevorzugten Ausführungsform umfassen die Polyole (b-i) einen oder mehrer Bestandteile, ausgewählt aus:
(b-i-1) Polyetherpolyole, bevorzugt mit einer OH-Zahl von 15 bis 200,
(b-i-2) Polymerpolyole,
(b-i-3) Vernetzungsmittel, und
(b-i-4) Zellöffner.

Die eingesetzten Polyetherpolyole (b-i-1) werden im allgemeinen nach bekannten Verfahren, beispielsweise durch anionische Polymerisation mit Alkalihydroxiden, wie Natrium- oder Kaliumhydroxid, als Katalysatoren und unter Zusatz mindestens eines Startermoleküls, das 2 bis 4 reaktive Wasserstoffatome gebunden enthält aus einem oder mehreren Alkylenoxiden, bevorzugt ausgewählt aus Propylenoxid (PO) und Ethylenoxid (EO), hergestellt.

Als Polyetherpolyole (b-i-1) können weiterhin sogenannte niedrig ungesättigte Polyetherpolyole verwendet werden. Unter niedrig ungesättigten Polyolen werden im Rahmen dieser Erfindung insbesondere Polyetheralkohole mit einem Gehalt an ungesättigten Verbindungen von kleiner als 0,02 meq/g, bevorzugt kleiner als 0,01 meq/g, verstanden. Derartige Polyetheralkohole werden durch Anlagerung von Ethylenoxid und/oder Propylenoxid und Mischungen daraus, an mindestens difunktionelle Alkohole in Gegenwart von sogenannten Doppelmetallcyanidkatalysatoren hergestellt.

Die Alkylenoxide können einzeln, alternierend nacheinander oder als Mischungen verwendet werden. Der Einsatz eines EO/PO-Gemisches führt zu einem Polyetherpolyol mit statistischer PO/EO-Einheiten-Verteilung. Es ist möglich, zunächst ein PO/EO-Gemisch einzusetzen und dann vor Abbruch der Polymerisation nur noch PO oder EO zu verwenden, dann erhält man ein Polyetherpolyol mit PO- bzw. EO-Endcap.

Als Startermoleküle kommen beispielsweise in Betracht: Wasser, organische Dicarbonsäuren, Diamine, wie z.B. gegebenenfalls mono- und dialkylsubstituiertes Ethylendiamin, Diethylentriamin, Triethylentetramin, 1,3-Propylendiamin, und/oder 1,3- bzw. 1,4-Butylendiamin. Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl- und N-Ethyldiethanolamin und Trialkanolamine wie z.B. Triethanolamin und Ammoniak. Weiterhin eingesetzt werden als Startermoleküle zwei-, dreiwertige oder vierwertige Alkohole, wie Ethandiol, Propandiol-1,2 und -1,3, Diethylenglykol, Dipropylenglykol, Butandiol-1,4, Hexandiol-1,6, Glycerin und/oder Pentaerythrit.

Die Polyetherpolyole liegen einzeln oder in Form eines Gemisches aus zwei oder mehr der vorstehend genannten Polyetherpolyolen vor.

Im allgemeinen weisen die verwendeten Polyetherpolyole eine (b-i-1) OH-Zahl von 15 bis 200, bevorzugt von 20 bis 120, besonders bevorzugt von 22 bis 90, und eine nominale Funktionalität von 2 bis 4, bevorzugt von 2,2 bis 2,9 auf.

Als Bestandteil (b-i-2) werden sogenannte Polymerpolyole, die auch häufig als Graft-Polyole bezeichnet werden, eingesetzt. Diese Polymerpolyole werden üblicherweise durch radikalische Polymerisation von geeigneten olefinischen Monomeren, beispielsweise Styrol, Acrylnitril, Acrylaten und/oder Acrylamid, in einem als Pfropfgrundlage dienenden Polyetherol hergestellt. Die Seitenketten entstehen im allgemeinen durch Übertragung der Radikale von wachsenden Polymerketten auf Polyetherpolyole. Das Polymer-Polyol enthält neben dem Propfcopolymerisaten überwiegend die Homopolymere der Olefine, dispergiert in unverändertem Polyetherol.

In einer bevorzugten Ausführungsform werden als Monomere Acrylnitril, Styrol, insbesondere Styrol und Acrylnitril im Verhältnis zwischen 1:1 bis 3:1, sowie gegebenenfalls in Gegenwart weiterer Monomerer, eines Makromers, eines Moderators und unter Einsatz eines Radikal-Initiators, meist Azo- oder Peroxidverbindungen, in einem Polyetherol bzw. Polyesterol als kontinuierlicher Phase hergestellt.

Als Trägerpolyetherole kommen üblicherweise Verbindungen mit einer Hydroxylgruppen-Funktionalität von 1,8 bis 8, vorzugsweise 2 bis 3, einer Hydroxylzahl von 20 bis 100 mg KOH/g, bevorzugt 25 bis 70 mg KOH/g, hergestellt durch anionische, kationische oder neutrale Polymerisation (DMC) von Alkylenoxiden, bevorzugt Ethylenund/oder Propylenoxid in Betracht.

Die Polymerpolyole (b-i-2) werden vorzugsweise im Gemisch mit Polyetherpolyolen (b-i-1), verwendet. In einer bevorzugten Ausführungsform liegt das Polymerpolyol (b-i-2) in einer Menge von 5 bis 50 Gew-%, bevorzugt von 6 bis 30 Gew-%, besonders bevorzugt von 8 bis 20 Gew-%, bezogen auf das Gesamtgewicht der Komponente (b-i), vor. In einer bevorzugten Ausführungsform enthält die Polyolkomponente (b-i) des weiteren Vernetzungsmittel als Bestandteil (b-i-3). Als Vernetzungsmittel geeignet sind beispielsweise Polyole, bevorzugt Polyetherpolyole, mit einer nominalen Funktionalität von mehr als 2, bevorzugt von 3 bis 4, und mit einer OH-Zahl von mehr als 200 bis 2000, bevorzugt von 500 bis 1200.

Üblicherweise liegen Vernetzungsmittel (b-i-3) in einer Menge von 0,1 bis 5 Gew-%, bevorzugt von 0,5 bis 4 Gew-%, besonders bevorzugt von 1 bis 3 Gew-%, bezogen auf das Gesamtgewicht der Komponente (b-i), vor.

In einer bevorzugten Ausführungsform enthält die Polyolkomponente (b-i) des weiteren Zellöffner als Bestandteil (b-i-4). Als Zellöffner geeignet sind beispielsweise Polyetherpolyole mit einem Ethylenoxidgehalt von mehr als 50 Gew-%, bevorzugt von mehr als 65 Gew-%, bezogen auf das Gesamtgewicht der eingesetzten Alkylenoxide. Diese Polyetherpolyole weisen bevorzugt eine nominale Funktionalität von 2 bis 3 auf. Diese Polyetherpolyole weisen ferner bevorzugt eine OH-Zahl von 25 bis 120, mehr bevorzugt von 30 bis 80 auf.

Üblicherweise liegen Zellöffner (b-i-4) in einer Menge von 0,1 bis 35 Gew-%, bevorzugt von 1 bis 5 Gew-%, besonders bevorzugt von 2 bis 4 Gew-%, bezogen auf das Gesamtgewicht der Komponente (b-i), vor.

Als Treibmittel (c-i) können allgemein bekannte chemisch oder physikalisch wirkende Verbindungen eingesetzt werden. Als chemisch wirkendes Treibmittel kann bevorzugt Wasser eingesetzt werden. Beispiele für physikalische Treibmittel sind inerte (cyclo)aliphatische Kohlenwasserstoffe mit 4 bis 8 Kohlenstoffatomen, die unter den Bedingungen der Polyurethanbildung verdampfen. In einer bevorzugten Ausführungsform wird Wasser als alleiniges Treibmittel verwendet.

Die Menge der eingesetzten Treibmittel richtet sich überwiegend nach der angestrebten Dichte der Schaumstoffe. Im allgemeinen wird Wasser von 0 bis 5 Gew-%, bevorzugt von 0,1 bis 3 Gew-% verwendet. Im allgemeinen kann ferner physikalisch wirkendes Treibmittel von 0 bis 8 Gew-%, bevorzugt von 0,1 bis 5 Gew-% verwendet. Als Treibmittel kann auch Kohlendioxid eingesetzt werden, das vorzugsweise als Gas in den Ausgangskomponenten gelöst wird.

Bevorzugt werden Wasser und /oder Kohlendioxid als Treibmittel eingesetzt.

Als Katalysatoren für die Herstellung der erfindungsgemäßen Polyurethanschaumstoffe werden die üblichen und bekannten Polyurethanbildungskatalysatoren (d-i) eingesetzt, beispielsweise organische Zinnverbindungen, wie Zinndiacetat, Zinndioctoat, Dibutyl-Dibutylzinndilaurat, und/oder stark basische Amine wie Diazabicyclooctan, Triethylamin, oder vorzugsweise Triethylendiamin oder Bis(N,N-Dimethylaminoethyl)ether. Die Katalysatoren werden vorzugsweise in einer Menge von 0,1 bis 3 Gew-%, vorzugsweise 0,5 bis 2 Gew-%, bezogen auf das Gesamtgewicht der Komponente (b-i), eingesetzt.

Die Umsetzung der Komponenten (a-i) (b-i) und (c-i) erfolgt gegebenenfalls in Anwesenheit von (e-i) Hilfs- und/oder Zusatzstoffen, wie z.B. Zellreglern, Trennmitteln, Pigmenten, Verstärkungsstoffen wie Glasfasern, oberflächenaktiven Verbindungen und/oder Stabilisatoren gegen oxidativen, thermischen, hydrolytischen oder mikrobiellen Abbau oder Alterung.

Die Polyurethanschaumstoffe (i) weisen üblicherweise eine Dichte von 25 bis 500 g/l, vorteilhafter weise von 30 bis 250 g/l, bevorzugt von35 bis 100 g/l, mehr bevorzugt von 40 bis 80 g/l, besonders bevorzugt von 45 bis 70 g/l auf.

Zur Herstellung des aus der Reaktion der Polyurethansystemkomponenten (a-i), (b-i) und (c-i) sowie gegebenenfalls (d-i) und (e-i) resultierenden Polyurethanschaumstoffs (i) werden im allgemeinen die Polyurethansystemkomponenten (a-i), (b-i) und (c-i) sowie gegebenenfalls (d-i) und (e-i) über übliche Hoch- oder Niederdruckmischköpfe vermischt in solchen Mengen zur Umsetzung gebracht (d.h. in das Formwerkzeug eingebracht), dass das Äquivalenzverhältnis von NCO-Gruppen zur Summe der reaktiven Wasserstoffatome 1:0.8 bis 1:1.25, vorzugsweise 1:0.9 bis 1:1.15 beträgt. Ein Verhältnis von 1:1 entspricht hierbei einem NCO-Index von 100.

Die erfindungsgemäßen Verbundelemente enthalten gegebenenfalls eine Deckschicht (iii), Vliesstoff aus thermoplastischen Polyurethan (ii) und Polyurethanschaumstoff (i).

Zwischen Vliesstoff (ii) und Polyurethanschaumstoff (i) liegt üblicherweise Haftung vor, d.h. die Adhäsionskräfte zwischen Vliesstoff (ii) und Polyurethanschaumstoff (i) sind größer als die Kohäsionskräfte innerhalb des Polyurethanschaumstoffs. Folglich reißt bei Zugbelastung die Schaumstoffschicht (i) und es wird nicht der Verbund zwischen (i) und (ii) getrennt.

Gegenstand der Erfindung ist weiterhin ein Verfahren zur Herstellung eines Verbundelements, enthaltend
i) Polyurethanschaumstoff,
ii) Vliesstoff aus thermoplastischem Polyurethan und
iii) gegebenenfalls eine Deckschicht,
umfassend die Schritte:
1) gegebenenfalls Einbringen der Deckschicht (iii) in ein Formwerkzeug,
2) Einbringen des Vliesstoffes (ii) in das Formwerkzeug,
3) Aufbringen von Polyurethansystemkomponenten, und
4) Reaktion der Polyurethansystemkomponenten zu einem Polyurethanschaumstoff (i).

Das erfindungsgemäße Verfahren wird in einem Formwerkzeug durchgeführt. Das verwendete Formwerkzeug enthält bevorzugt ein Formunterteil und ein Formoberteil. Als Formunterteil und/oder Formoberteil werden im allgemeinen Werkzeughälften eingesetzt, deren Oberfläche beispielsweise aus Stahl, Aluminium, Emaille, Teflon, Epoxydharz oder einem anderen polymeren Werkstoff besteht, wobei die Oberfläche gegebenenfalls verchromt, beispielsweise hartverchromt sein kann. Bevorzugt sollten die Formwerkzeuge temperierbar sein, um die bevorzugten Temperaturen einstellen zu können. Zum Erreichen der nötigen Schließkraft ist bevorzugt eine Werkzeughälfte druckbeaufschlagt.

Die optionale Deckschicht (iii) wird im allgemeinen in einem separaten Prozess hergestellt. In Schritt (1) des erfindungsgemäßen Verfahrens wird sie in ein Formwerkzeug eingebracht, bevorzugt wird sie auf die Unterseite eines geöffneten Formwerkzeugs eingelegt. Es ist bevorzugt, dass die Deckschicht vor dem Einbringen in die Form tiefgezogen wird. Die Deckschicht befindet sich dabei bevorzugt mit der späteren Sichtseite nach unten im Formunterteil. In einer bevorzugten Ausführungsform wird die Deckschicht durch Anlegen von Unterdruck, beispielsweise mittels Vakuumdüsen, am Formunterteil fixiert.

In Schritt (2) des erfindungsgemäßen Verfahrens wird der Vliesstoff (ii), enthaltend das vorstehend beschriebene thermoplastische Polyurethan, eingebracht. Falls bereits in Schritt (1) eine Deckschicht eingelegt wurde, so wird der Vliesstoff (ii) bevorzugt auf die Deckschicht (iii) gelegt. Bevorzugt wird hierbei der Vliesstoff mit der Deckschicht adhäsiv verbunden, beispielsweise mittels Kleber, insbesondere mittels Heißkleber.

In einer Ausführungsform ist es möglich, dass Schritt (1) und (2) des erfindungsgemäßen Verfahrens "in einem Schritt" durchgeführt werden. In diesem Fall kann eine Laminat aus Deckschicht (iii) und Vliesstoff (ii) in die Form eingebracht werden. Gegebenenfalls ist das Laminat vor dem Einbringen tiefgezogen worden.

In Schritt (3) des erfindungsgemäßen Verfahrens werden flüssige Polyurethansystemkomponenten eingebracht. Die Polyurethansystemkomponenten enthalten die vorstehend beschriebenen Bestandteile (a-i), (b-i) und (c-i) sowie gegebenenfalls (d-i) und (e-i). Das Einbringen der Polyurethansystemkomponenten erfolgt üblicherweise durch Gießen (bevorzugt mittels Hockdruckmaschinen, alternativ mittels Niederdruckmaschinen) oder Sprühen.

Zur Erzielung der Haftung zwischen Vliesstoff (ii) und Schaumstoff (i) ist eine Flammkaschierung des Vliesstoffs (ii) üblicherweise nicht notwendig und wird bevorzugt nicht durchgeführt.

In einer Ausführungsform werden die Polyurethansystemkomponenten in die geöffnete Form auf den Vliesstoff, vorzugsweise mit Hilfe eines Roboters, verteilt. Die Form wird bevorzugt geschlossen, bevor das flüssige PUR-Gemisch zum Schäumen beginnt. Diese Ausführungsform ist insbesondere geeignet zur Herstellung von Sitzen oder Teppichen.

In einer alternativen Ausführungsform werden die Polyurethansystemkomponenten in die geschlossene Form auf den Vliesstoff eingespritzt. Diese Ausführungsform ist insbesondere geeignet zur Herstellung von Teppichen.

In Schritt (4) des erfindungsgemäßen Verfahrens erfolgt Reaktion der Polyurethansystemkomponenten zu einem Polyurethanschaumstoff (i). Die Reaktion erfolgt üblicherweise bei Temperaturen des Formwerkzeugs von 20 bis 60°C. An dieser Stelle sei angemerkt, dass die Reaktion im streng chemischen Sinne schon beim Vermischen der Komponenten beginnt.

Das Aufschäumen der Polyurethansystemkomponenten in der geschlossenen Form bewirkt:
1. Komplettes Ausfüllen der Form mit Polyurethanschaumstoff
2. Haftung des Polyurethanschaumstoffs (i) am Vliesstoff (ii), ohne diesen zu durchtränken.

Üblicherweise lässt man den Polyurethanschaumstoff 0,5 bis 5 Minuten, bevorzugt 1 bis 2 Minuten aushärten, bevor die Form geöffnet und das resultierende Verbundelement entnommen wird.

Für das erfindungsgemäße Verfahren ergeben sich im allgemeinen Zykluszeiten von 1 bis 15 Minuten, bevorzugt von 2 bis 5 Minuten. Unter Zykluszeit wird hierbei ein kompletter Durchlauf, d.h. die Zeit vom Einlegen der Deckschicht bis zur Entnahme des fertigen Bauteils verstanden.

Die erfindungsgemäßen Verbundelemente werden im allgemeinen für Sitze oder Teppiche verwendet.

Beispiele für Sitze sind Sitze in Verkehrsmitteln, z.B. Autositze, Zugsitze, Flugzeugsitze; Sitze zur Inneneinrichtung, z.B. Couchstühle und/oder Polster für Bürositze. Beispiele für Teppiche sind Teppiche in Verkehrsmitteln, z.B. Autoteppiche, Zugteppiche, Flugzeugteppiche und/oder Sitze zur Inneneinrichtung, z.B. Bodenteppiche.

Gegenstand der Erfindung ist somit auch ein Sitz, enthaltend das erfindungsgemäße Verbundelement. Insbesondere handelt es sich bei dem erfindungsgemäßen Sitz um einen Autositz. Ferner ist Gegenstand der Erfindung ein Teppich, enthaltend das erfindungsgemäße Verbundelement.

Die Erfindung soll durch nachfolgende Beispiele veranschaulicht werden.

### Beispiele

### Beispiel 1: Herstellung eines Vliesstoffs aus thermoplastischem Polyurethan

Elastollan^{®} B 95 A wurde auf einer Nonwovenanlage (= Anlage zur Herstellung von Vliesstoffen) der Fa Reifenhäuser hergestellt. Hierzu wurde das TPU bei einer durchschnittlichen Durchsatzrate 100 kg/h im Extruder bei einer graduell von 200°C bis auf 240°C ansteigender Temperatur aufgeschmolzen und über den Spinnbalken versponnen. Die Prozessluft hatte eine Temperatur von 240°C .Der Abstand von Düse zu Kollektor (DCD) betrug 20 cm. Die Bandgeschwindigkeit wurde so eingestellt, dass das Flächengewicht des Vliesstoffs 200 g/m² betrug.

### Beispiel 2: Herstellung eines Vliesstoffs aus thermoplastischem Polyurethan

Elastollan B 95 wurde auf einer Nonwovenanlage der Fa Reifenhäuser hergestellt. Hierzu wurde das TPU bei einer durchschnittlichen Durchsatzrate 100 kg/h im Extruder bei einer graduell von 200°C bis auf 240°C ansteigender Temperatur aufgeschmolzen und über den Spinnbalken versponnen. Die Prozessluft hatte eine Temperatur von 240°C Der Abstand von Düse zu Kollektor (DCD) betrug 20 cm. Die Bandgeschwindigkeit wurde so eingestellt, dass das Flächengewicht des Vliesstoffs 50 g/m² betrug.

### Beispiel 3: Herstellung eines Vliesstoffs aus thermoplastischem Polyurethan

Elastollan 1180 A wurde auf einer Nonwovenanlage der Fa Reifenhäuser hergestellt. Hierzu wurde das TPU bei einer durchschnittlichen Durchsatzrate 100 kg/h im Extruder bei einer graduell von 200°C bis auf 240°C ansteigender Temperatur aufgeschmolzen und über den Spinnbalken versponnen. Die Prozessluft hatte eine Temperatur von 240°C .Der Abstand von Düse zu Kollektor (DCD) wurde zwischen 10 cm und 60 cm variiert. Die Bandgeschwindigkeit wurde so eingestellt, dass das Flächengewicht des Vliesstoffs 100 g/m² betrug.

### Beispiele 4 bis 6: Herstellung von Verbundelementen, enthaltend Vliesstoffe und Polyurethanschaumstoffe

Es wurden die in Tabelle 1 angegebenen Einsatzstoffe für die Beispiele 4 bis 6 zur Herstellung des Polyurethanschaumstoffs (i) verwendet. Die angegebenen Einsatzstoffe wurden mittels Hochdruckmischkopf vermischt und reagierten zu einem Polyurethanschaumstoff. Bei den Beispielen 4 und 5 handelt es sich um Vergleichsbeispiele.

**Tabelle 1:**

| Komponente | Vergleichsbeispiel 4 Gewichtsteile | Vergleichsbeispiel 5* Gewichtsteile | Beispiel 6 Gewichtsteile |
|---|---|---|---|
| Lupranol^{®} 2090 | 83,20 | 82,10 | 83,20 |
| Lupranol^{®} 2032 | 10,00 | 10,00 | 10,00 |
| Lupranol^{®} VP9349 | 1,50 | 1,50 | 1,50 |
| Glycerin | 0,90 | 0,90 | 0,90 |
| Lupragen^{®} N 201 | 0,60 | 0,60 | 0,60 |
| Tegostab^{®} B 8680 | 0,10 | 0,10 | 0,10 |
| Laromin^{®} C 260 | | 0,50 | |
| Lupranat^{®} M 20A | | 0,60 | |
| Lupragen^{®} N 211 | 0,20 | 0,20 | 0,20 |
| Jeffcat^{®} ZF 10 | 0,1 | 0,1 | 0,1 |
| Wasser | 3,4 | 3,4 | 3,4 |

### Vergleichsbeispiel 5:

Die im Vergleichsbeispiel 5 angegebenen Gewichtsteile Lupranol^{®} 2090, Lupranol^{®} 2032, Lupranol^{®} VP9349, Glycerin, Lupragen^{®} N 201, Tegostab^{®} B 8680 und 0,5 Gew. Teile Laromin^{®} C 260 wurden unter intensiven Rühren vermischt. Danach erfolgte unter intensiven Rühren die Zugabe von 0,6 Gew. Teile Lupranat^{®} M 20A. Nach einer Rührzeit von 15 Minuten wurden die in der Rezeptur angegebenen Gewichtsteile Wasser, Jeffcat^{®} ZF 10 und Lupragen^{®} N 211 zugesetzt und vermischt. Die so hergestellte A- Komponente enthielt im Gegensatz zu dem Vergleichsbeispiel 4 und Beispiel 6 dispergierten Harnstoff.

Zur Herstellung des Polyurethanschaumstoffs (i) wurden die Polkomponenten der Beispiele 4 bis 6 mit einem NCO-Prepolymer (NCO-Gehalt: 31 %, erhältlich aus der Umsetzung eines Gemisches MDI und PMDI mit einem Polyetherpolyol auf Basis Glycerin und Propylenoxid (OHZ 42mgKOH/g)) umgesetzt. Das Umsetzungsgemisch wurde für das "Hinterschäumen" eines textilen Materials bzw. eines Vliesstoffes aus thermoplastischem Polyurethan (ii) eingesetzt.

Nach dem Verschäumen wurde die Penetrierfähigkeit beurteilt

| Kennwerte | Vergleichsbeispiel 4 | Vergleichsbeispiel 5* | Beispiel 6 |
|---|---|---|---|
| Viskosität Polyol-Komponente | 1550mPas | 2070mPas | 1550mPas |
| Vliesstoff | Polyester | Polyester | TPU aus Beispiel 1 |
| Penetrierfähigkeit** | 3-4 | 2 | 1 |

| | | | |
|---|---|---|---|
| ** Das Penetrierverhalten wurde optisch nach einer Skalierung von "1" = absolut kein Eindringen bis "5" = dringt voll durch) bestimmt. | | | |

## Patentansprüche

1. Verbundelement, enthaltend
i) einen Polyurethanschaumstoff, erhältlich durch Vermischen von Isocyana-ten (a-i), Polyolen (b-i) und Treibmitteln (c-i) sowie gegebenenfalls Katalysatoren (d-i) und Zusatzstoffen (e-i),
ii) einen Vliesstoff aus thermoplastischem Polyurethan und
iii) gegebenenfalls eine Deckschicht.

2. Verbundelement nach Anspruch 1, **dadurch gekennzeichnet, dass** es sich bei der Deckschicht (iii) um Textilien, Vliese und/oder Leder handelt.

3. Verbundelement nach Anspruch 1 oder 2, **dadurch gekennzeichnet, dass** der Vliesstoff (ii) eine Flächenmasse von 20 bis 500 g/m², gemessen nach ISO 9073-1 aufweist.

4. Verbundelement nach einem der Ansprüche 1 bis 3, **dadurch gekennzeichnet, dass** der Vliesstoff (ii) eine Dicke von 0,01 bis 5 Millimeter (mm), gemessen nach ISO 9073-2, aufweist.

5. Verbundelement nach einem der Ansprüche 1 bis 4, **dadurch gekennzeichnet, dass** das zur Herstellung des Vliesstoffes verwendete thermoplastische Polyurethan eine Shore-Härte von Shore 80 A bis Shore 60 D, gemessen nach DIN 53505, aufweist.

6. Verbundelement nach einem der Ansprüche 1 bis 5, **dadurch gekennzeichnet, dass** der Polyurethanschaumstoff (i) ein Polyurethanweichschaumstoff mit einer Druckspannung bei 10 % Stauchung gemäß DIN 53421 von weniger als 30 kPa ist.

7. Verwendung eines Verbundelements, enthaltend
(i) Polyurethanschaumstoff, erhältlich durch Vermischen von Isocyanaten (a-i), Polyolen (b-i) und Treibmitteln (c-i) sowie gegebenenfalls Katalysatoren (d-i) und Zusatzstoffen (e-i),
ii) Vliesstoff aus thermoplastischem Polyurethan und
iii) gegebenenfalls Deckschicht,
zur Herstellung von Sitzen oder Teppichen.

8. Sitz, enthaltend ein Verbundelement gemäß einem der Ansprüche 1 bis 6.

9. Teppich, enthaltend ein Verbundelement gemäß einem der Ansprüche 1 bis 6.

10. Sitz nach Anspruch 8, **dadurch gekennzeichnet, dass** es sich um einen Autositz handelt.

11. Verfahren zur Herstellung eines Verbundelements, enthaltend
i) Polyurethanschaumstoff,
ii) Vliesstoff aus thermoplastischem Polyurethan und
iii) gegebenenfalls Deckschicht,
umfassend die Schritte:
1) gegebenenfalls Einbringen der Deckschicht in ein Formwerkzeug,
2) Einbringen des Vliesstoffes in das Formwerkzeug,
3) Aufbringen von Polyurethansystemkomponenten, enthaltend Isocyanate (a-i), Polyole (b-i) und Treibmittel (c-i) sowie gegebenenfalls Katalysatoren (d-i) und Zusatzstoffe (e-i), und
4) Reaktion der Polyurethansystemkomponenten zu einem Polyurethanschaumstoff.

## Claims

1. A composite element comprising
i) a polyurethane foam obtainable by mixing isocyanates (a-i), polyols (b-i) and blowing agents (c-i) and optionally catalysts (d-i) and additives (e-i),
ii) a nonwoven of thermoplastic polyurethane, and
iii)optionally a covering layer.

2. The composite element according to claim 1 wherein said covering layer (iii) comprises textiles, webs and/or leather.

3. The composite element according to claim 1 or 2 wherein said nonwoven (ii) has a basis weight in the range from 20 to 500 g/m², measured to ISO 9073-1.

4. The composite element according to any one of claims 1 to 3 wherein said nonwoven (ii) has a thickness in the range from 0.01 to 5 millimeters (mm), measured to ISO 9073-2.

5. The composite element according to any one of claims 1 to 4 wherein said thermoplastic polyurethane used to produce said nonwoven has a Shore hardness in the range from Shore 80 A to Shore 60 D, measured to DIN 53505.

6. The composite element according to any one of claims 1 to 5 wherein said polyurethane foam (i) is a polyurethane flexible foam having a DIN 53421 compressive stress at 10% compressing strain of less than 30 kPa.

7. The use of a composite element comprising
i) a polyurethane foam obtainable by mixing isocyanates (a-i), polyols (b-i) and blowing agents (c-i) and optionally catalysts (d-i) and additives (e-i),
ii) a nonwoven of thermoplastic polyurethane, and
iii)optionally a covering layer,
for producing seats or carpets.

8. A seat comprising a composite element according to any one of claims 1 to 6.

9. A carpet comprising a composite element according to any one of claims 1 to 6.

10. The seat according to claim 8 as an auto seat.

11. A process for producing a composite element comprising
i) a polyurethane foam,
ii) a nonwoven of thermoplastic polyurethane, and
iii)optionally a covering layer,
comprising the steps of:
1) if appropriate introducing the covering layer into a mold,
2) introducing the nonwoven into the mold,
3) applying polyurethane system components comprising isocyanates (a-i), polyols (b-i) and blowing agents (c-i) and optionally catalysts (d-i) and additives (e-i), and
4) reacting the polyurethane system components to form a polyurethane foam.

## Revendications

1. Élément composite, contenant
i) une mousse de polyuréthane, pouvant être obtenue par mélange d'isocyanates (a-i), de polyols (b-i) et d'agents d'expansion (c-i) ainsi qu'éventuellement de catalyseurs (d-i) et d'additifs (e-i),
ii) un non-tissé à base de polyuréthane thermoplastique et
iii) éventuellement une couche de recouvrement.

2. Élément composite selon la revendication 1, **caractérisé en ce que** la couche de recouvrement (iii) consiste en textiles, non-tissés et/ou cuir.

3. Élément composite selon la revendication 1 ou 2, **caractérisé en ce que** le non-tissé (ii) présente une masse par unité de surface de 20 à 500 g/m², mesurée selon ISO 9073-1.

4. Élément composite selon l'une quelconque des revendications 1 à 3, **caractérisé en ce que** le non-tissé (ii) présente une épaisseur de 0,01 à 5 millimètres (mm), mesurée selon ISO 9073-2.

5. Élément composite selon l'une quelconque des revendications 1 à 4, **caractérisé en ce que** le polyuréthane thermoplastique utilisé pour la production du non-tissé présente une dureté Shore de Shore 80 A à Shore 60 D, mesurée selon DIN 53505.

6. Élément composite selon l'une quelconque des revendications 1 à 5, **caractérisé en ce que** la mousse polyuréthane (i) est une mousse souple de polyuréthane ayant une contrainte de compression à 10 % d'écrasement selon DIN 53421 de moins de 30 kPa.

7. Utilisation d'un élément composite, contenant
i) une mousse de polyuréthane, pouvant être obtenue par mélange d'isocyanates (a-i), de polyols (b-i) et d'agents d'expansion (c-i) ainsi qu'éventuellement de catalyseurs (d-i) et d'additifs (e-i),
ii) un non-tissé à base de polyuréthane thermoplastique et
iii) éventuellement une couche de recouvrement,
pour la fabrication de sièges ou de tapis.

8. Siège, contenant un élément composite selon l'une quelconque des revendications 1 à 6.

9. Tapis, contenant un élément composite selon l'une quelconque des revendications 1 à 6.

10. Siège selon la revendication 8, **caractérisé en ce qu'**il s'agit d'un siège d'automobile.

11. Procédé pour la production d'un élément composite, contenant
i) une mousse de polyuréthane,
ii) un non-tissé à base de polyuréthane thermoplastique et
iii) éventuellement une couche de recouvrement,
comprenant les étapes :
1) éventuellement introduction de la couche de recouvrement dans un outil de formage,
2) introduction du non-tissé dans l'outil de formage,
3) application de composants de système polyuréthane, contenant des isocyanates (a-i), des polyols (b-i) et des agents d'expansion (c-i) ainsi qu'éventuellement des catalyseurs (d-i) et des additifs (e-i), et
4) réaction des composants de système polyuréthane en une mousse de polyuréthane.
